# EUROPÄISCHE PATENTSCHRIFT

(11) **EP 1 911 382 B1**
(45) Veröffentlichungstag und Bekanntmachung des Hinweises auf die Patenterteilung: **10.11.2010**
(21) Anmeldenummer: 07018330.6
(22) Anmeldetag: 19.09.2007
(51) Int. Cl.: A47J 31/60

(54) **Vorrichtung zur Zubereitung und Ausgabe von Getränken mit Reinigungseinrichtung**
Device for preparing and serving drinks with a cleaning device
Dispositif destiné à la préparation et le débit de boissons doté d'un dispositif de nettoyage

(30) Priorität: 11.10.2006 DE 102006047969
(43) Veröffentlichungstag der Anmeldung: 16.04.2008
(73) Patentinhaber: NIRO-PLAN AG, 4663 Aarburg (CH)
(72) Erfinder:
(74) Vertreter: Lemcke, Brommer & Partner

(56) Entgegenhaltungen:
- EP-A- 1 382 281
- WO-A-2005/063608
- WO-A-2006/052506
- US-A1- 2004 118 291

## Beschreibung

Die Erfindung betrifft eine Vorrichtung zur Zubereitung und Ausgabe von Getränken mit den Merkmalen des Oberbegriffs des Anspruchs 1 sowie ein Verfahren zur Reinigung eines Getränkeausgabegeräts mit den Merkmalen des Oberbegriffs von Anspruch 11.

Eine derartige Vorrichtung bzw. Verfahren ist aus der WO2005/063608A bekannt. Es ist weiter ein Getränkeausgabeautomat mit einer Einrichtung zum Einleiten und Durchführen eines Reinigungsvorgangs mit einer wässrigen Reinigungsflüssigkeit aus der EP 13 82 281 B1 bekannt geworden. Zur Durchführung der Reinigung wird einer wässrigen Reinigungsflüssigkeit ein Reiniger zugesetzt. Um die korrekte Zugabe des Reinigers zu überprüfen, ist eine entsprechende Messvorrichtung stromabwärts eines Brühers angeordnet. Diese Messvorrichtung misst die Leitfähigkeit bzw. den elektrischen Widerstand der Reinigungsflüssigkeit und stellt auf diesem Wege fest, ob der Reiniger der Reinigungsflüssigkeit korrekt zugeführt wurde.

Da die Leitwertmessung auf der Messung von ionisierbaren gelösten Stoffen in der wässrigen Reinigungsflüssigkeit basiert, ist es wegen der regional unterschiedlichen Wasserhärte äußerst schwierig, eine genaue Leitwertmessung zu erhalten. Um dennoch zufriedenstellende Resultate in der Hinsicht zu erhalten, ist es notwendig, den in dieser Schrift offenbarten Getränkeausgabeautomat regelmäßig auf einen neuen Bezugspunkt bezüglich der Wasserhärte zu eichen, damit das Vorhandensein des Reinigers in der wässrigen Reinigungsflüssigkeit korrekt gemessen werden kann. Insgesamt ist eine kontinuierliche Überwachung des Referenzpunktes für die Leitfähigkeitsmessung notwendig, was den Getränkeausgabeautomat insgesamt wartungsaufwändiger, teuerer und anfälliger für Störungen macht.

Weiterhin ist es durch die ungenaue (Leitwert-)Messung möglich, dass nach Beendigung des Reinigungsvorgangs immer noch Reste der wässrigen Reinigungsflüssigkeit in dem Getränkeausgabeautomat verbleiben, weil die Messung der An- bzw. Abwesenheit des Reinigers nicht genau genug erfolgt ist. Diese Rückstände beeinträchtigen in erheblicher Weise den Geschmack und den Geruch der Getränke. Erst nach einer gewissen Anzahl von Getränkeausgaben sind die Leitungen insoweit durch die Getränke selbst durchgespült, dass eine Geschmacks- und Geruchsbelästigung nicht mehr auftritt.

Aufgabe der vorliegenden Erfindung ist es daher, einen Getränkeausgabeautomat zur Verfügung zu stellen, welcher die Nachteile des Standes der Technik beseitigt und zudem einfach, kostengünstig und genau eine Überprüfung der Zugabe eines Reinigers ermöglicht.

Diese Aufgabe wird erfindungsgemäß durch eine Vorrichtung und ein Verfahren mit den Merkmalen des kennzeichnenden Teils des Anspruches 1 bzw. 11 gelöst.

Dadurch, dass die Mittel zur Erkennung der Dosierung Mittel zum Messen des pH-Wertes umfassen, kann die Überprüfung des Vorhandenseins eines Reinigers in einem Reinigungsmedium wesentlich genauer erfolgen, da der pH-Wert weit weniger in Abhängigkeit der Wasserhärte variiert als der Wert der Leitfähigkeit. Eine aufwändige Berechnung der Dimensionierung der Elektroden, wie es bei der Leitwertmessung erforderlich ist, entfällt hier.

Weiter umfassen die Mittel zum Zuführen des Reinigers einen Mischbehälter für die Aufbereitung eines Reinigungsmediums. Dadurch ist es möglich, bereits vor der eigentlichen Reinigung den Reiniger in entsprechender Weise aufzubereiten, d. h. insbesondere in entsprechender Konzentration im Reinigungsmedium zu lösen, so dass dann anschließend die Reinigung mit einem optimal dosierten Reiniger beginnen kann.

Ebenso sind Mittel zur Einleitung des Reinigungsvorganges vorgesehen. Diese können beispielsweise eine Steuereinrichtung umfassen, die ein Signal zum Einleiten und/oder Stoppen des Reinigungsvorgangs abgibt, je nachdem ob zuvor feststellt wurde, ob der Reiniger zugegeben wurde oder nicht. So wird sichergestellt, dass kein Reinigungsvorgang ohne Reiniger durchgeführt wird. Darüber hinaus kann zusätzlich eine Anzeigeeinrichtung vorgesehen sein, die dann erneut zur Zugabe von Reinigungsmitteln auffordert. Weiterhin kann auch ein manuelles und/oder automatisches Einsetzen eines Behälters für die Reinigung den Reinigungsvorgang starten.

Erfindungsgemäß weisen die Mittel zur Einleitung des Reinigungsvorganges einen Sensor zur Erkennung des Vorhandenseins des Mischbehälters auf. Dadurch kann, wenn der Mischbehälter eingesetzt ist, der Sensor ein Signal zur Einleitung des Reinigungsvorganges abgeben. Der Reinigungsvorgang wird dann direkt durch das Vorhandensein des Mischbehälters eingeleitet.

Weiterhin sind die Mittel zur Erkennung der Dosierung des Reinigers im Mischbehälter und/oder stromabwärts des Mischbehälters angeordnet. Durch diese Anordnung ist die Dosierung des Reinigers direkt im Mischbehälter vor der Zuführung des Reinigungsmediums in die zumindest eine Leitung möglich. Eine stromabwärts des Mischbehälters angeordnete Position der Mittel zur Erkennung des Dosierung des Reinigers ermöglichen ebenso eine Kontrolle, ob die zumindest eine Leitung vollständig von dem Reinigungsmedium beaufschlagt wurde.

Ist der Mischbehälter vorteilhafterweise austauschbar angeordnet, ist es möglich, dass beispielsweise der Benutzer der Vorrichtung zur Zubereitung und Ausgabe von Getränken den Reinigungsvorgang durch Einsetzen des Mischbehälters starten kann. Alternativ kann der Benutzer auch bereits den Reiniger in entsprechender Form in den Mischbehälter geben, so dass nach dem Einsetzen des Mischbehälters der Reinigungsvorgang nach gegebenenfalls entsprechender Aufbereitung sofort gestartet werden kann. Damit entfallen auch zusätzliche Leitungen, um den Reiniger von einem anderen Teil der Vorrichtung zur Zubereitung und Ausgabe von Getränken in die entsprechenden Leitungen zur Getränkeausgabe zuzuführen.

Weiterhin enthalten die Mittel zum Zuführen des Reinigers zur Reinigung eine Pumpe und/oder ein Umschlagventil. In einfacher Weise kann damit das Reinigungsmedium transportiert werden. Durch das Umschlagventil sind zudem auch andere Bereiche der zumindest einen Leitung mit dem Reinigungsmedium beaufschlagbar bzw. das Reinigungsmedium kann über das Umschlagventil direkt eingeleitet werden.

Gemäß einer bevorzugten Ausführungsform ist der Reiniger für die Durchführung des Reinigungsvorganges in Tabletten- und/oder in Pulver- und/oder in flüssiger Form zuführbar. Damit hat der Benutzer vielfältige Möglichkeiten, entsprechende Reiniger zur optimalen Reinigung einzusetzen.

In besonders vorteilhafter Weise besteht das Reinigungsmedium aus einer wässrigen Lösung des Reinigers. Damit wird eine einfache und kostengünstige Form eines Reinigungsmediums zur Reinigung zur Verfügung gestellt.

Insbesondere ist es weiter vorteilhaft, dass zusätzliche Mittel zur Erkennung der Dosierung des Reinigers an einem Auslauf der Getränkeausgabe angeordnet sind. Dies ermöglicht die Kontrolle, ob sämtliche von dem Reinigungsmedium beaufschlagten Bereiche bereits gereinigt wurden, ebenso wird dadurch eine Kontrolle der Konzentration des Reinigungsmediums auch während und/oder am Ende des Reinigungsvorgangs möglich.

Damit das Reinigungsmedium jedoch vollständig aus den zu beaufschlagenden Bereichen entfernt wird, ist es vorteilhaft, wenn die zumindest eine Leitung mit einem Spülmedium beaufschlagt werden kann. Insgesamt werden so Geschmacks- und Geruchsbeeinträchtigungen bei den Getränken, die durch die Vorrichtung zur Zubereitung und Ausgabe von Getränken ausgegeben werden, vermieden, indem die Reste des eventuell noch in der zumindest einen Leitung verbliebenen Reinigungsmediums mit Hilfe des Spülmediums beseitigt werden.

Weiterhin ist es vorteilhaft, wenn das Spülmedium eine wässrige Flüssigkeit, insbesondere Wasser, ist. Falls das Reinigungsmedium aus einer wässrigen Lösung des Reinigers besteht, ist damit ein nahezu restloses Entfernen des Reinigungsmediums mit Hilfe des Spülmediums in Form einer wässrigen Flüssigkeit möglich, da der Reiniger ebenso im Spülmedium gelöst wird und sich so einfach und schnell entfernen lässt.

Gemäß dem erfindungsgemäßen Verfahren zur Reinigung eines Getränkeausgabegerätes mit einem Reinigungsmedium, wobei die Dosierung des Reinigungsmediums festgestellt wird, wird der pH-Wert des Reinigungsmediums zur Feststellung der Dosierung des Reinigungsmediums gemessen. Dabei kann durch die Verwendung der pH-Wert-Messung die Anwesenheit des Reinigers im Reinigungsmedium wesentlicher genauer als bei einer Leitwertmessung erfolgen, da der pH-Wert wesentlich weniger stark in Abhängigkeit der Wasserhärte variiert als der Leitwert. Zudem entfällt die aufwändige Berechnung der Dimensionierung der Elektroden, wie dies bei der Leitwertmessung erforderlich ist.

Weiter wird gemäß dem erfindungsgemäßen Verfahren das Reinigungsmedium in einem Mischbehälter aufbereitet. Erfindungsgemäß erfolgt das Einleiten des Verfahrens durch das Einsetzen des Mischbehälters und/oder die Beendigung des Verfahrens durch Herausnahme des Mischbehälters. Damit ist in einfacher Weise die Einleitung bzw. die Beendigung des Reinigungsverfahrens möglich. Außerdem werden durch das Einsetzen und das anschließende Entfernen des Mischbehälters auch gegebenenfalls noch vorhandene Reste des Reinigungsmediums im Mischbehälter entfernt. Zweckmäßigerweise wird die Dosierung des Reinigungsmediums zumindest einmal im Mischbehälter und/oder stromabwärts des Mischbehälters gemessen. So kann sowohl zu Beginn als auch stromabwärts in den mit dem Reinigungsmedium zu beaufschlagenden Bereichen die Dosierung des Reinigungsmediums überwacht werden, und so eine effektive und möglichst kurze Reinigungszeit ermöglicht werden.

In vorteilhafter Weise erfolgt das Einleiten und/oder die Durchführung des Verfahrens automatisch oder manuell. Damit kann sowohl der Benutzer selbst, wenn durch ungewöhnliche Umstände eine stärkere Verschmutzung aufgetreten ist, den Reinigungsvorgang einleiten, als auch der Reinigungsvorgang automatisch in Abwesenheit des Benutzers, beispielsweise in der Nacht in regelmäßigen Abständen und/oder Teile des einzelnen Reinigungsvorgangs ausgeführt werden, ohne dass damit während des täglichen Gebrauchs Wartezeiten anfallen, bis die Vorrichtung für die Ausgabe von Getränken wieder zur Verfügung steht.

Vorteilhafterweise umfasst das Verfahren vor und/oder nach der Beaufschlagung mit dem Reinigungsmedium eine Beaufschlagung der Leitung mit einem Spülmedium, so dass das Reinigungsmedium vollständig aus den Leitungen durch das Spülmedium entfernt werden kann.

Damit die Dosierung des Reinigers im Reinigungsmedium kontinuierlich überwacht werden kann, wird vor und/oder während der Beaufschlagung mit dem Reinigungsmedium die Dosierung des Reinigers gemessen.

Besonders vorteilhaft ist dabei, wenn während der Beaufschlagung mit dem Spülmedium der pH-Wert zumindest einmal gemessen wird, um zu erkennen, dass das Reinigungsmedium vollständig aus den zu beaufschlagenden Bereichen entfernt worden ist.

Für die Beendigung des Verfahrens ist es vorteilhaft, dass das Verfahren zur Reinigung nach Erreichen eines bestimmten pH-Wertes manuell und/oder automatisch gestoppt wird. Dadurch wird sichergestellt, dass der Reinigungsvorgang möglichst kurz und effektiv durchgeführt wird; Wartezeiten, bis wieder Getränke ausgegeben werden können, werden so auf ein Minimum beschränkt.

Weitere Merkmale und Vorteile der vorliegenden Erfindung ergeben sich aus der nachfolgenden Beschreibung eines Ausführungsbeispiels anhand der Zeichnung, die als Vorrichtung zur Zubereitung und Ausgabe von Getränken eine Kaffeemaschine mit einer Einrichtung zum Einleiten und Durchführen eines Reinigungsvorgangs zeigt.

Dabei zeigt
- Figur 1: eine nicht erfindungsgemäße Vorrichtung in Form einer Kaffeemaschine, die ein Umschlagventil zur Reinigung beinhaltet;
- Figur 2: eine nicht erfindungsgemäße Vorrichtung in Form einer Kaffeemaschine, die zur Reinigung einen Reinigungsadapter beinhaltet;
- Figur 3: eine erfindungsgemäße Vorrichtung in Form einer Kaffeemaschine, die zur Reinigung einen Reinigungsbehälter beinhaltet.

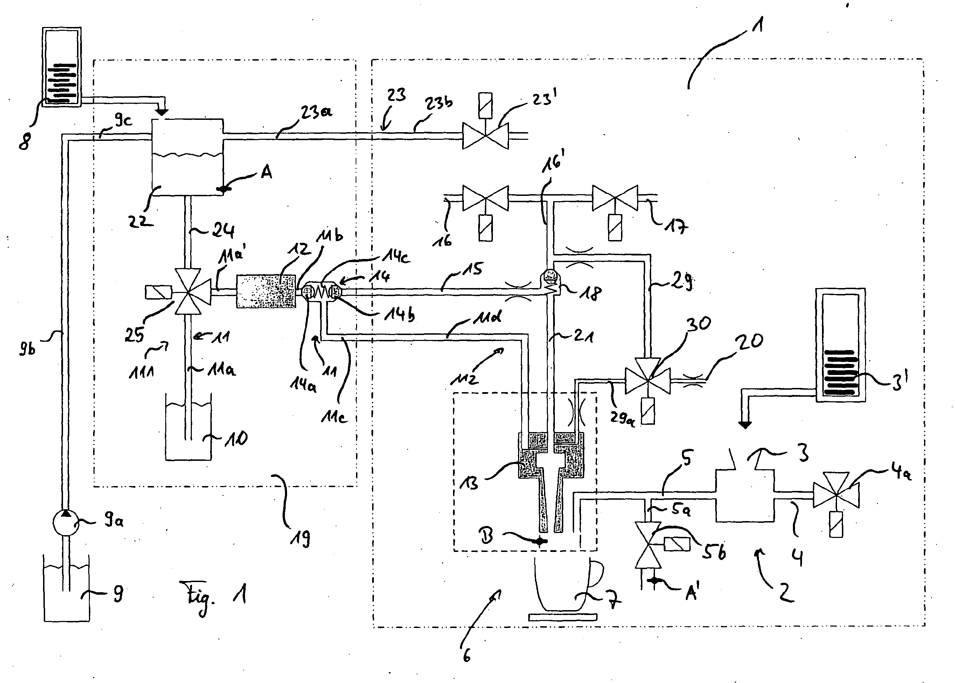

In den Zeichnungen Figuren 1 bis 3 ist auf der rechten Seite ein großer gestrichelt umrandeter Bereich dargestellt, der eine Kaffeemaschine 1 andeutet, die auf ihrer rechten unteren Seite eine Brühgruppe 2 mit einer Kaffeezufuhr 3 und einer Heißwasserzufuhr 4 beinhaltet. Von dort wird der aufgebrühte Kaffee mittels einer Kaffeeleitung 5 in einen Auslauf 6 transportiert und von dort in eine unter dem Auslauf 6 platzierte Kaffeetasse 7 gegeben.

Ein weiterer wesentlicher Bestandteil der Kaffeemaschine besteht in einer Vorrichtung zur Zubereitung und Ausgabe von Milch, bei der die in einem Aufbewahrungsbehälter 10 gelagerte Milch über eine Milchleitung 11 von einer Pumpe 12 in eine Milchmischkammer 13 transportiert wird, die ebenfalls im Bereich des Auslaufs 6 der Kaffeemaschine 1 oberhalb der Kaffeetasse 7 vorgesehen ist. Die Milchleitung 11 gliedert sich im Wesentlichen in der Ausführungsform gemäß Figur 1 in fünf Abschnitte, nämlich in den Abschnitt 11a, der zwischen dem Aufbewahrungsbehälter 10 für die Milch und einem Umschlag-Ventil 25 zur Reinigung angeordnet ist, in den Abschnitt 11a', der zwischen Umschlag-Ventil 25 und der Pumpe 12 angeordnet ist, in den Abschnitt 11 b, der zwischen der Pumpe 12 und einem nachfolgend näher beschriebenen Spülleitungsanschluss 14 angeordnet ist, in den Abschnitt 11 c, der zwischen dem Spülleitungsanschluss und einer ebenfalls nachfolgend näher beschriebenen Kühlungsgrenze angeordnet ist, sowie in den Abschnitt 11 d, der zwischen der Kühlungsgrenze und der Milchmischkammer 13 angeordnet ist.

Der Spülleitungsanschluss 14 verbindet die Milchleitung 11 mit einer Spülleitung 15, die an eine Kaltwasserzufuhr 16 und an eine Dampfzufuhr 17 angeschlossen ist, so dass Kaltwasser oder Dampf als Spülmedium genutzt werden kann. Der Spülleitungsanschluss 14 ist als doppelt wirkendes Rückschlagventil ausgebildet mit zwei kugelförmigen Ventilkörpern 14a, 14b und mit einer vorgespannten Feder 14c, die beide Ventilkörper gegen die Einlässe der angeschlossenen Milchleitung 11 b bzw. der Spülleitung 15 drückt. Wird die Milchpumpe 12 betätigt, wird der die Milchleitung 11 b abdichtende Ventilkörper 14a entgegen der Federkraft weggedrückt und gibt die Milchleitung 11 c, 11 d frei, so dass die Milch über die Abschnitte 11 c, 11 d in die Milchmischkammer 13 fließen kann.

In ähnlicher Weise führt die Kaltwasser- 16 bzw. Dampfzufuhr 17 über einen Leitungsabschnitt 16' dazu, dass das Rückschlagventil 18 den Weg des Kaltwassers bzw. des Dampfes in die Spülleitung 15 freigibt, so dass ein Spülmedium in die Spülleitung 15 eintreten kann. Im weiteren Verlauf wird der die Spülleitung 15 abdichtende Ventilkörper 14b entgegen der Federkraft des Federelements 14c nach innen gedrückt und das Spülmedium kann über die Abschnitte 11 c, 11 d der Milchleitung 11 in die Milchmischkammer 13 strömen und diese sowie die Milchleitungsabschnitte 11 c, 11 d spülen.

Das gestrichelt angedeutete linke Rechteck 19 stellt einen gekühlten Bereich, insbesondere einen Kühlschrank, dar, der im Wesentlichen den Milchaufbewahrungsbehälter 10, die Leitungsabschnitte 11 a, 11a', 24, die Pumpe 12, das Umschlag-Ventil 25, den Spülleitungsanschluss 14 nebst Ventilkörpern 14a, 14b und Feder 14c sowie den Mischbehälter 22 nebst einem pH-Wert-Sensor A und die Leitungsabschnitte 9c, 23a umgibt und kühlt. Die Milch wird hierdurch im gekühlten Bereich auf einer niedrigen Temperatur gehalten, so dass die Entstehung von Milchsäure bzw. Casein gehemmt wird.

Um auch die ungekühlten Teilbereiche 112 der Milchleitung 11 effektiv zu reinigen, ist ein Milchreinigerbehälter 9 vorgesehen, welcher nicht notwendigerweise im gekühlten Bereich 19 angeordnet sein muss. Mittels einer Pumpe 9a wird über Leitungsabschnitte 9b bzw. 9c der Milchreiniger in den Mischbehälter 22 transportiert, gegebenenfalls kann anstelle des Milchreinigerbehälters 9 auch ein Tablettenmagazin 8 verwendet werden. Tabletten des Tablettenmagazins werden dann einzeln in den Mischbehälter 22 gegeben. Da üblicherweise der Milchreiniger 9 bzw. die Tabletten des Tablettenmagazins 8 den Milchreiniger in konzentrierter Form enthalten, ist zusätzlich an den Mischbehälter 22 eine Kaltwasserleitung 23 angeschlossen. Wird der Reinigungsvorgang gestartet, wird über das Reinigungsventil 23' Kaltwasser über die Kaltwasserleitung 23 mit einem ungekühlten Leitungsabschnitt 23b und einem gekühlten Leitungsabschnitt 23a dem Mischbehälter 22 zugeführt, so dass im Mischbehälter 22 die Aufbereitung des Reinigungsmediums vorgenommen werden kann.

Weiterhin ist eine Luftzufuhr 20 vorgesehen. Die Luftzufuhr 20 beaufschlagt über ein Ventil 30 zwei Leitungsabschnitte 29, 29a mit Luft. Dabei mündet der Leitungsabschnitt 29 in den Leitungsabschnitt 16'. Das Rückschlagventil 18 gibt dann den Weg der Luft in die Spülleitung 15 und im weiteren Verlauf in die Leitungsabschnitte 11 c, 11d frei.

Der Leitungsabschnitt 29a mündet dagegen im Bereich der Milchmischkammer 13 stromaufwärts der Einmündung des Leitungsabschnittes 11d in einen stromabwärts des Rückschlagventils 18 angeordneten Leitungsabschnitt 21, der an dem Rückschlagventil 18 direkt angeschlossen ist und in die Milchmischkammer 13 mündet.

Die Luftzufuhr 20 bzw. in Folge die Leitungsabschnitte 29, 29a dienen zum Ausblasen der Milchmischkammer 13 bzw. der Spülleitung 15, des Spülleitungsausschlusses 14 und der Abschnitte 11 c, 11 d der Milchleitung 11.

Für die Feststellung der richtigen Dosierung des Milchreinigers ist in Figur 1 am Mischbehälter 22 ein pH-Wert-Sensor A angeordnet. Dieser misst den pH-Wert des im Mischbehälter 22 aufbereiteten Reinigungsmediums und gibt ein Signal direkt oder indirekt an eine Steuereinrichtung, die gegebenenfalls die Kaltwasserzufuhr über das Ventil 23' bzw. die Reinigerzufuhr des Milchreinigers über die Förderpumpe 9a steuert. Der pH-Wert-Sensor A prüft dabei die Anwesenheit des Reinigungsmittels und liefert dann ein Signal entweder an den Benutzer oder an eine entsprechende Steuereinrichtung, wenn das Kaltwasser und der Milchreiniger im richtigen Verhältnis in dem Mischbehälter 22 dosiert wurden zur Fortsetzung oder zum Abbruch des Reinigungsvorgangs. Bei Verwendung von basischen Reinigern wird bei einem pH-Wert oberhalb von 10, insbesondere oberhalb von 11, bei sauren Reinigern unterhalb eines pH-Wertes von 4, insbesondere unterhalb von 3, der Reinigungsvorgang fortgesetzt.

Wird nun der Reinigungsvorgang fortgesetzt, wird das Umschlag-Ventil 25 betätigt, so dass der Leitungsbereich 11 a, der zwischen dem Milchaufbewahrungsbehälter 10 und dem Umschlag-Ventil 25 liegt, unterbrochen und statt dessen der Leitungsbereich 24 mittelbar über das Umschlag-Ventil 25 und den Leitungsbereich 11a' an die Pumpe 12 angeschlossen. Sobald nun die Pumpe 12 in analoger Weise betätigt wird, wird das Reinigungsmedium, das sich im Mischbehälter 22 befindet, über den Leitungsabschnitt 24, das Umschlag-Ventil 25 und den Leitungsabschnitt 11a' gefördert. Dabei wird wiederum bei Betätigung der Pumpe 12 der abdichtende Ventilkörper 14a entgegen der Federkraft der Feder 14c weggedrückt und gibt die Leitungsabschnitte 11 c und 11 d frei, so dass das Reinigungsmedium in die Milchmischkammer 13 über die Leitungsabschnitte 11c, 11d fließen kann.

Um zu überprüfen, ob das Reinigungsmedium sämtliche Leitungsabschnitte beaufschlagt hat, kann ein weiterer pH-Wert-Sensor B am Auslauf 6 der Kaffeemaschine 1 angeordnet sein. In diesem Fall können dann die Messwerte der pH-Wert-Sensoren A, B verglichen werden. Liegen die Messwerte der pH-Wert-Sensoren A, B im selben vorgebbaren Bereich kann davon ausgegangen werden, dass nahezu alle Verunreinigungen im Reinigungsmedium gelöst und abtransportiert werden konnten.

Um nun das Reinigungsmedium selbst wieder aus den damit beaufschlagten Leitungsbereichen 24, 11a', 11 b, 11 c, 11 d und der Milchmischkammer 13 zu spülen, damit keine sensorischen Beeinträchtigungen durch das Reinigungsmedium im auszugebenden Kaffee entstehen, wird nun ein Spülprozess gestartet. Dabei wird nun nicht mehr weiterer Reiniger von dem Reinigerbehälter 9 über die Pumpe 9a in dem Mischbehälter 22 zugeführt, sondern der Mischbehälter 22 wird mit weiterem Kaltwasser über das Kaltwasserventil 23' und die Kaltwasserleitung 23 beaufschlagt. Dabei wird nun solange Kaltwasser als Spülmedium in den Mischbehälter 22 zugeführt und die Leitungsbereiche 24, 11a', 11b, 11 c, 11 d, 13 mit dem Spülmedium beaufschlagt, bis der am Mischbehälter 22 angeordnete pH-Wert-Sensor A einen pH-Wert im Bereich von 7 misst.

Zur Kontrolle, ob das Reinigungsmedium auch vollständig und rückstandsfrei aus den Leitungsbereichen 24, 11a', 11 b, 11 c, 11 d und der Milchmischkammer 13 entfernt wurde, kann wiederum der an der Milchmischkammer 13 bzw. am Auslauf 6 angeordnete pH-Wert-Sensor B dienen. Dieser misst zumindest einmal den pH-Wert des Spülmediums. Zeigen nun beide pH-Wert-Sensoren A, B einen pH-Wert im Bereich von 7 an, wird der Spülvorgang beendet und ebenso der Reinigungsvorgang insgesamt, da nun neben den Verunreinigungen auch das Reinigungsmedium restlos aus den entsprechenden mit dem Reinigungsmedium und vom Spülmedium beaufschlagten Bereichen herausgespült wurde. Die Kaffeemaschine steht nun wieder für die Ausgabe von Kaffee und/oder Milch zur Verfügung.

Es ist auch möglich, eine derartige Reinigung nicht auf die von Milch beaufschlagten Bereiche zu beschränken, sondern eine derartige Reinigung kann ebenfalls auch für die von Kaffee beaufschlagten Bereiche in der Kaffeemaschine 1 angewendet werden.

Der grundsätzliche Ablauf der Reinigung ist dabei in Analogie zum bereits beschriebenen Ablauf für die von Milch beaufschlagten Bereiche. Auf der vom Kaffee beaufschlagten Bereich der Kaffeemaschine 1 wird dabei der Reiniger, der in flüssiger, fester oder in Tablettenform vorliegen kann, in die Brühgruppe 2 über die Kaffeezufuhr 3 zugeführt, beispielsweise über ein Tablettenmagazin 3'. Anschließend wird Heißwasser durch ein Brühventil 4a über die Heißwasserzufuhr 4 in die Brühgruppe 2 eingeleitet und der Reiniger aufbereitet. Die Reinigung wird anschließend fortgesetzt und dabei die Anwesenheit des Reinigungsmediums mit Hilfe eines weiteren pH-Wert-Sensors A' durch die Messung des pH-Wertes des Reinigungsmediums geprüft. Bei Anwesenheit eines basischen Reinigers wird ab einem pH-Wert oberhalb von 10, insbesondere oberhalb von 11, bei Anwesenheit eines sauren Reinigers unterhalb eines pH-Wertes von 4, insbesondere unterhalb von 3, der Reinigungsvorgang fortgesetzt.

Grundsätzlich liegt es jedoch auch möglich andere Schwellenwerte des pH-Wertes für die Anwesenheit des Reinigers mit Reinigungsmedium vorzusehen. Damit der pH-Wert-Sensor A' während der normalen Verwendung der Kaffeemaschine, das heißt, wenn kein Reinigungsvorgang durchgeführt wird, nicht mit Kaffee und/oder Milch verschmutzt wird, kann er einer Abzweigleitung 5a mit vorgeschaltetem Ventil 5b stromabwärts der Brühgruppe 2 angeordnet werden. Das Ventil 5b wird dann nur während des Reinigungsvorgangs geöffnet. Analog dem oben beschriebenen Verfahren kann auch am Auslauf der Kaffeeleitung 5 ein weiterer pH-Wert-Sensor (nicht gezeigt) angeordnet sein und zumindest einmal den pH-Wert während der Beaufschlagung der Kaffeeleitung 5 mit dem Reinigungsmedium messen. Verändert sich der gemessene pH-Wert des am Auslauf der Kaffeeleitung befindlichen pH-Wert-Sensors im Vergleich zur Messung des pH-Wertes durch den pH-Wert-Sensor A' nicht mehr, so wird der Reinigungsvorgang abgebrochen. Anschließend wird die Kaffeeleitung 5 und die Brühgruppe 2 sowie gegebenenfalls die Abzweigleitung 5a mit Heißwasser solange gespült, bis der pH-Wert-Sensor A' und/oder der am Ende der Kaffeeleitung 5 angeordnete mögliche zweite pH-Wert-Sensor einen pH-Wert im Bereich von 7 anzeigt. Danach wird das Ventil 5b geschlossen und der Reinigungs- und Spülvorgang insgesamt beendet.

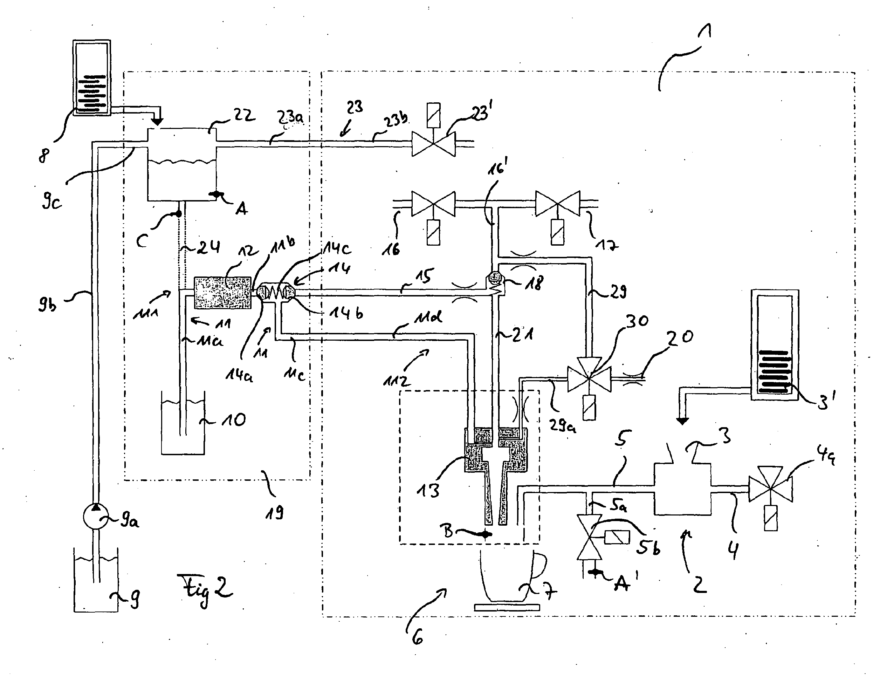

In Figur 2 ist eine Vorrichtung zur Zubereitung und Ausgabe von Getränken in Form einer Kaffeemaschine gezeigt. Dabei ist der Bereich der Kaffeemaschine 1 analog zu dem entsprechenden Bereich in Figur 1 aufgebaut. Im gekühlten Bereich 19 ist nun anstelle des Umschlag-Ventils 25 eine umsteckbare Leitung 11a bzw. 24 angeordnet. Um den Reinigungsvorgang vorzubereiten, wird die Leitung 11 a von dem Milchvorratsbehälter 10 entfernt und an den Mischbehälter 22 über das jetzt als 24 bezeichnete Leitungsstück angeschlossen. Ein an der Leitung 24 und/oder ein Mischbehälter 22 angeordneter Sensor oder Schalter C erkennt die Anwesenheit der Leitung 24 und gibt ein Signal zur Einleitung des Reinigungsvorgangs aus. Der Reinigungsvorgang läuft nun im Wesentlichen analog zu dem Reinigungsvorgang entsprechend der Beschreibung zu der Figur 1 ab. Lediglich am Ende des Reinigungsvorgangs wird anstelle der Umschaltung durch das Umschlag-Ventil 25, die Leitung 24 abgetrennt und wieder mit dem Milchbehälter 10 als Leitungsabschnitt 11a verbunden. Damit kann die Pumpe 12 wieder über die Leitungsabschnitte 11a, 11a' Milch vom Milchvorratsbehälter 10 ansaugen.

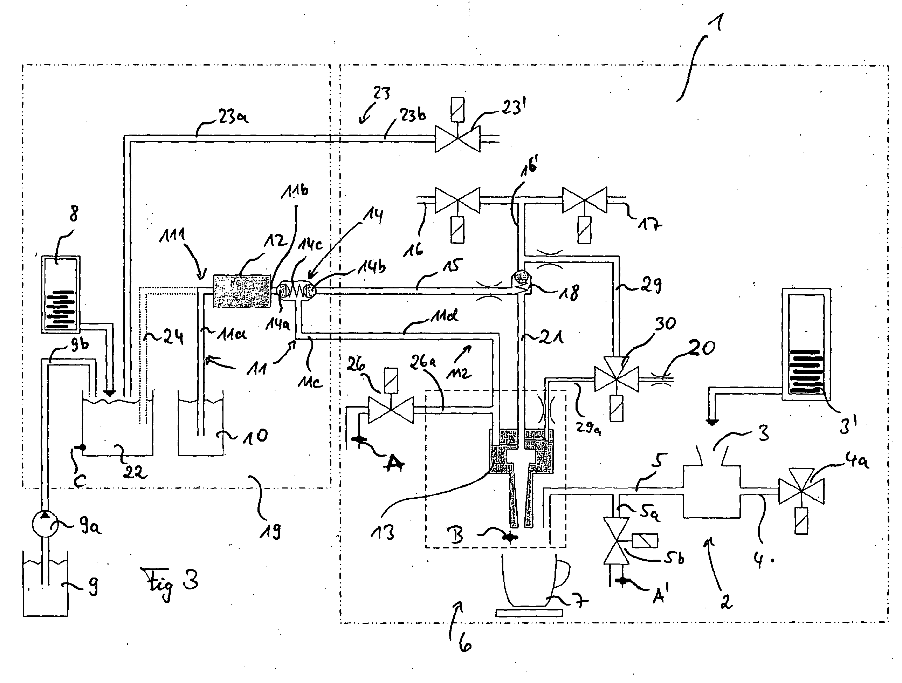

In Figur 3 ist eine erfindungsgemäße Vorrichtung zur Zubereitung und Ausgabe von Getränken in Form einer Kaffeemaschine 1 gezeigt. Im Unterschied zu den Ausführungsformen in den Figuren 1 und 2 ist hier der Milchbehälter 10 austauschbar angeordnet. Zur Einleitung des Reinigungsvorganges wird der Milchvorratsbehälter 10 entnommen und durch den Mischbehälter 22 ersetzt. Ein Sensor oder Schalter C erkennt dabei die Anwesenheit bzw. den Austausch des Milchvorratsbehälters 10 gegen den Mischbehälter 22. Ist der Mischbehälter 22 eingesetzt, wird der Reinigungsvorgang gestartet. Dabei erfolgt die Reinigung und die anschließende Spülung analog zu der zur Figur 1 gehörigen Beschreibung des Reinigungs- bzw. Spülvorgangs. Ist der Spülvorgang insgesamt abgeschlossen, das heißt, der pH-Wert-Sensor A und/oder der pH-Wert-Sensor B messen einen pH-Wert im Bereich von ca. 7, wird der Mischbehälter 22 entfernt und der Milchvorratsbehälter 10 wieder eingesetzt. Dabei kann das jeweilige Entfernen und Einsetzen sowohl manuell durch einen Schalter oder auch automatisch mit Hilfe eines Sensors C erfolgen.

Des Weiteren können die jeweiligen pH-Wert-Sensoren A, A', B über eine Abzweigungsleitung 26a mit einem vorgeschalteten Ventil 26 angeordnet werden, damit der pH-Wert-Sensor A, A', B während des normalen Betriebes der Kaffeemaschine nicht mit Milch und/oder Kaffee verschmutzt wird. Die Abzweigleitung 26a wird dabei nur während des Reinigungs- und Spülvorganges geöffnet.

Als weitere Möglichkeit, einen Reiniger zur Reinigung in den Mischbehälter 22 bzw. in die Brühgruppe 2 zuzuführen, kann ein Tablettenmagazin 8, 3' zur Zuführung des Reinigers in Tablettenform in allen Ausführungsformen angeordnet werden.

Zusammenfassend bietet die vorliegende Erfindung den Vorteil, dass mit Hilfe der pH-Wert-Messung der Reiniger im Reinigungsmedium exakt dosiert werden kann und sowohl das Beaufschlagen mit dem Reinigungsmedium als auch das Entfernen des Reinigungsmediums aus der zumindest einen Leitung schnell und genau erfolgen kann.

## Patentansprüche

1. Vorrichtung zur Zubereitung und Ausgabe von Getränken mit einer Einrichtung zum Einleiten und Durchführen eines Reinigungsvorgangs, bestehend aus zumindest einer Leitung (4, 5, 11), die zum Transport der Getränke zu einer Getränkeausgabe dient, Mitteln zum Zuführen eines Reinigers (9, 9a, 9b, 9c, 22, 23, 24, 25) zur zumindest teilweisen Reinigung der zumindest einen Leitung (4, 5, 11), Mitteln zur Erkennung der Dosierung des Reinigers (A, A', B) wobei die Mittel zur Erkennung der Dosierung (A, A', B) Mittel zum Messen des pH-Wertes (A, A', B) umfassen und wobei die Mittel zum Zuführen des Reinigers (9, 9a, 9b, 9c, 22, 23, 24, 25) einen Mischbehälter (22) für die Aufbereitung eines Reinigungsmediums beinhalten, und Mittel zur Einleitung des Reinigungsvorganges,
**dadurch gekennzeichnet,**
**dass** die Mittel zur Einleitung des Reinigungsvorganges einen Sensor (C) zur Erkennung des Vorhandenseins des Mischbehälters (22) aufweisen.

2. Vorrichtung nach Anspruch 1,
**dadurch gekennzeichnet, dass**
die Mittel zur Erkennung der Dosierung (A, A', B) des Reinigers im Mischbehälter (22) und/oder stromabwärts des Mischbehälters (22) angeordnet sind.

3. Vorrichtung nach Anspruch 1,
**dadurch gekennzeichnet, dass**
der Mischbehälter (22) austauschbar angeordnet ist.

4. Vorrichtung nach zumindest einem der Ansprüche 1 bis 3,
**dadurch gekennzeichnet, dass**
die Mittel zum Zuführen des Reinigers (9, 9a, 9b, 9c, 22, 23, 24, 25) zur Reinigung eine Pumpe (9a) und/oder ein Umschlag-Ventil (25) beinhalten

5. Vorrichtung nach zumindest einem der Ansprüche 1 bis 4,
**dadurch gekennzeichnet, dass**
der Reiniger für die Durchführung des Reinigungsvorganges in Tabletten- oder in Pulver- oder in flüssiger Form zuführbar ist.

6. Vorrichtung nach zumindest einem der Ansprüche 1 bis 5,
**dadurch gekennzeichnet, dass**
das Reinigungsmedium aus einer wäßrigen Lösung des Reinigers besteht

7. Vorrichtung nach zumindest einem der Ansprüche 1 bis 6,
**dadurch gekennzeichnet, dass**
zusätzliche Mittel (B) zur Erkennung der Dosierung des Reinigers an einem Auslauf der Getränkeausgabe (13) angeordnet sind.

8. Vorrichtung nach zumindest einem der Ansprüche 1 bis 7,
**dadurch gekennzeichnet, dass**
der Mischbehälter (22) innerhalb eines gekühlten Bereichs (19) angeordnet ist.

9. Vorrichtung nach zumindest einem der Ansprüche 1 bis 8,
**dadurch gekennzeichnet, dass**
die zumindest eine Leitung (4, 5, 11) mit einem Spülmedium beaufschlagt werden kann.

10. Vorrichtung nach Anspruch 9,
**dadurch gekennzeichnet, dass**
das Spülmedium eine wässrige Flüssigkeit, insbesondere Wasser, ist.

11. Verfahren zur Reinigung eines Getränkeausgabegerätes mit einem Reinigungsmedium, wobei die Dosierung des Reinigungsmediums festgestellt wird und der pH-Wert des Reinigungsmediums zur Feststellung der Dosierung des Reinigungsmediums gemessen wird und das Reinigungsmedium in einem Mischbehälter (22) aufbereitet wird
**dadurch gekennzeichnet, dass**
das Einleiten des Verfahrens durch das Einsetzen des Mischbehälters (22) erfolgt und/oder die Beendigung des Verfahrens durch Herausnahme des Mischbehälters (22) erfolgt.

12. Verfahren nach Anspruch 11,
**dadurch gekennzeichnet,**
**dass** die Dosierung des Reinigungsmediums im Mischbehälter (22) und/oder stromabwärts des Mischbehälters zumindest einmal gemessen wird.

13. Verfahren nach Anspruch 11,
**dadurch gekennzeichnet, dass** ein Einleiten und/oder eine Durchführung des Verfahrens automatisch oder manuell erfolgt.

14. Verfahren nach zumindest einem der Ansprüche 11 bis 13,
**dadurch gekennzeichnet,**
**dass** vor und/oder nach der Beaufschlagung mit dem Reinigungsmedium eine Beaufschlagung mit einem Spülmedium erfolgt.

15. Verfahren nach zumindest einem der Ansprüche 11 bis 14,
**dadurch gekennzeichnet,**
**dass** die Dosierung eines Reinigers im Reinigungsmedium vor und/oder während der Beaufschlagung mit dem Reinigungsmedium gemessen wird.

16. Verfahren nach Anspruch 14,
**dadurch gekennzeichnet, dass**
während der Beaufschlagung mit dem Spülmedium der pH-Wert zumindest einmal gemessen wird.

17. Verfahren nach Anspruch 11,
**dadurch gekennzeichnet, dass**
das Verfahren zur Reinigung nach Erreichen eines bestimmten pH-Wertes manuell und/oder automatisch gestoppt wird.

## Claims

1. Apparatus for preparing and dispensing beverages having a device for initiating and carrying out a cleaning operation, consisting of at least one line (4, 5, 11) which serves for transporting the beverages to a beverage dispenser, means for supplying a cleaner (9, 9a, 9b, 9c, 22, 23, 24, 25) for at least partially cleaning the at least one line (4, 5, 11), means for detecting the dose of the cleaner (A, A', B), wherein the means for detecting the dose (A, A', B) comprise means for measuring the pH value (A, A', B) and wherein the means for supplying the cleaner (9, 9a, 9b, 9c, 22, 23, 24, 25) include a mixing container (22) for the preparation of a cleaning medium, and means for initiating the cleaning operation,
**characterised in that**
the means for initiating the cleaning operation have a sensor (C) for detecting the presence of the mixing container (22).

2. Apparatus according to claim 1,
**characterised in that**
the means for detecting the dose (A, A', B) of the cleaner are arranged in the mixing container (22) and/or downstream of the mixing container (22).

3. Apparatus according to claim 1,
**characterised in that**
the mixing container (22) is arranged to be exchangeable.

4. Apparatus according to at least one of claims 1 to 3,
**characterised in that**
the means for supplying the cleaner (9, 9a, 9b, 9c, 22, 23, 24, 25) for cleaning include a pump (9a) and/or a switchover valve (25).

5. Apparatus according to at least one of claims 1 to 4,
**characterised in that**
the cleaner for carrying out the cleaning operation is suppliable in tablet form or in powder form or in liquid form.

6. Apparatus according to at least one of claims 1 to 5,
**characterised in that**
the cleaning medium consists of an aqueous solution of the cleaner.

7. Apparatus according to at least one of claims 1 to 6,
**characterised in that**
additional means (B) for detecting the dose of the cleaner are arranged at an outlet of the beverage dispenser (13).

8. Apparatus according to at least one of claims 1 to 7,
**characterised in that**
the mixing container (22) is arranged inside a cooled region (19).

9. Apparatus according to at least one of claims 1 to 8,
**characterised in that**
the at least one line (4, 5, 11) can be subjected to the action of a flushing medium.

10. Apparatus according to claim 9,
**characterised in that**
the flushing medium is an aqueous liquid, especially water.

11. Method of cleaning a beverage dispensing apparatus with a cleaning medium, the dose of the cleaning medium being ascertained and the pH value of the cleaning medium being measured in order to ascertain the dose of the cleaning medium and the cleaning medium being prepared in a mixing container (22),
**characterised in that**
the method is initiated by insertion of the mixing container (22) and/or the method is terminated by removal of the mixing container (22).

12. Method according to claim 11,
**characterised in that**
the dose of the cleaning medium is measured at least once in the mixing container (22) and/or downstream of the mixing container.

13. Method according to claim 11,
**characterised in that**
the method is initiated and/or carried out automatically or manually.

14. Method according to at least one of claims 11 to 13,
**characterised in that**
before and/or after subjection to the action of the cleaning medium, subjection to the action of a flushing medium is effected.

15. Method according to at least one of claims 11 to 14,
**characterised in that**
the dose of a cleaner in the cleaning medium is measured before and/or during subjection to the action of the cleaning medium.

16. Method according to claim 14,
**characterised in that**
during subjection to the action of the flushing medium the pH value is measured at least once.

17. Method according to claim 11,
**characterised in that**
the cleaning method is stopped manually and/or automatically once a certain pH value has been reached.

## Revendications

1. Dispositif pour préparer et distribuer des boissons doté d'un système pour déclencher et effectuer un processus de nettoyage, constitué d'au moins une conduite (4, 5, 11) qui sert au transport de la boisson vers un distributeur de boisson, de moyens pour apporter un agent de nettoyage (9, 9a, 9b, 9c, 22, 23, 24, 25) destiné à nettoyer au moins partiellement la conduite au moins unique (4, 5, 11), de moyens pour identifier le dosage de l'agent de nettoyage (A, A', B), sachant que les moyens pour identifier le dosage (A, A', B) comprennent des moyens pour mesurer le pH (A, A', B) et sachant que les moyens pour apporter l'agent de nettoyage (9, 9a, 9b, 9c, 22, 23, 24, 25) comprennent un récipient mélangeur (22) pour préparer un fluide de nettoyage, et des moyens pour déclencher le processus de nettoyage,
**caractérisé en ce que** les moyens pour déclencher le processus de nettoyage présentent un capteur (C) pour identifier la présence du récipient mélangeur (22).

2. Dispositif selon la revendication 1, **caractérisé en ce que** les moyens pour identifier le dosage de l'agent de nettoyage (A, A', B) sont disposés dans le récipient mélangeur (22) et/ou en aval du récipient mélangeur (22).

3. Dispositif selon la revendication 1, **caractérisé en ce que** le récipient mélangeur (22) est disposé avec possibilité de remplacement.

4. Dispositif selon au moins l'une des revendications 1 à 3, **caractérisé en ce que** les moyens pour apporter l'agent de nettoyage (9, 9a, 9b, 9c, 22, 23, 24, 25) en vue du nettoyage comprennent une pompe (9a) et/ou un distributeur de commutation (25).

5. Dispositif selon au moins l'une des revendications 1 à 4, **caractérisé en ce que** l'agent de nettoyage pour l'exécution du processus de nettoyage peut être apporté sous forme de tablettes ou de poudre, ou sous forme liquide.

6. Dispositif selon au moins l'une des revendications 1 à 5, **caractérisé en ce que** le fluide de nettoyage est constitué d'une solution aqueuse de l'agent de nettoyage.

7. Dispositif selon au moins l'une des revendications 1 à 6, **caractérisé en ce que** des moyens supplémentaires (B) pour identifier le dosage de l'agent de nettoyage sont disposés sur une évacuation du distributeur de boisson (13).

8. Dispositif selon au moins l'une des revendications 1 à 7, **caractérisé en ce que** le récipient mélangeur (22) est disposé à l'intérieur d'une zone refroidie (19).

9. Dispositif selon au moins l'une des revendications 1 à 8, **caractérisé en ce que** la conduite au moins unique (4, 5, 11) peut être sollicitée avec un fluide de rinçage.

10. Dispositif selon la revendication 9, **caractérisé en ce que** le fluide de rinçage est un liquide aqueux, notamment de l'eau.

11. Procédé pour nettoyer un appareil de distribution de boisson avec un fluide de nettoyage, sachant qu'on définit le dosage du fluide de nettoyage, qu'on mesure le pH du fluide de nettoyage pour définir le dosage du fluide de nettoyage et qu'on prépare le fluide de nettoyage dans un récipient mélangeur (22),
**caractérisé en ce que** le déclenchement du procédé s'effectue par la mise en place du récipient mélangeur (22), et/ou l'achèvement du procédé s'effectue par l'enlèvement du récipient mélangeur (22).

12. Procédé selon la revendication 11, **caractérisé en ce que** le dosage du fluide de nettoyage est mesuré au moins une fois dans le récipient mélangeur (22) et/ou en aval du récipient mélangeur.

13. Procédé selon la revendication 11, **caractérisé en ce que** le déclenchement et/ou l'exécution du procédé s'effectue automatiquement ou manuellement.

14. Procédé selon au moins l'une des revendications 11 à 13, **caractérisé en ce qu'**une sollicitation avec un fluide de rinçage s'effectue avant et/ou après la sollicitation avec le fluide de nettoyage.

15. Procédé selon au moins l'une des revendications 11 à 14, **caractérisé en ce qu'**on mesure le dosage d'un agent de nettoyage dans le fluide de nettoyage avant et/ou pendant la sollicitation avec le fluide de nettoyage.

16. Procédé selon la revendication 14, **caractérisé en ce qu'**on mesure au moins une fois le pH pendant la sollicitation avec le fluide de rinçage.

17. Procédé selon la revendication 11, **caractérisé en ce que** le procédé de nettoyage est arrêté manuellement et/ou automatiquement à l'atteinte d'un pH déterminé.
